# EUROPÄISCHE PATENTSCHRIFT

(11) **EP 3 398 402 B1**
(45) Veröffentlichungstag und Bekanntmachung des Hinweises auf die Patenterteilung: **08.04.2020**
(21) Anmeldenummer: 16822679.3
(22) Anmeldetag: 21.12.2016
(51) Int. Cl.: H05B 6/10, B23B 31/117, B23P 11/02, B23Q 3/12, H05B 6/14, H05B 6/38, H05B 6/42

(54) **SCHRUMPFGERÄT FÜR DEN VORZUGSWEISE MOBILEN EINSATZ**
SHRINK-FITTING APPLIANCE FOR PREFERABLY MOBILE USE
APPAREIL D'ASSEMBLAGE PAR FRETTAGE POUR UNE MISE EN OEUVRE DE PRÉFÉRENCE MOBILE

(30) Priorität: 28.12.2015 DE 102015016830
(43) Veröffentlichungstag der Anmeldung: 07.11.2018
(60) Teilanmeldung: 20158027.1
(73) Patentinhaber: Haimer GmbH, 86568 Hollenbach-Igenhausen (DE)
(72) Erfinder: PODHRÁZKÝ, Antonín, 67531 Jemnice (CZ)
(74) Vertreter: Misselhorn, Hein-Martin
(86) Internationale Anmeldenummer: PCT/EP2016/082261
(87) Internationale Veröffentlichungsnummer: WO 2017/114730

(56) Entgegenhaltungen:
- EP-B1- 1 283 759
- DE-A1-102005 014 984
- DE-A1-102008 045 781
- US-A- 4 017 701

## Beschreibung

### Grundsätzlicher Gegenstand der Erfindung

Die Erfindung betrifft eine Schrumpfvorrichtung nach dem Oberbegriff des Anspruchs 1.

### Stand der Technik

Schrumpfvorrichtungen zum Ein- und Ausschrumpfen von Werkzeugschäften in Werkzeughalter sind seit geraumer Zeit bekannt. Ursprünglich wurden solche Schrumpfvorrichtungen mit einem Gasbrenner oder Heißluft betrieben, mittels derer die Hülsenpartie des Werkzeughalters heiß gemacht wurde, um sie so weit aufzuweiten, dass sie einen Werkzeugschaft im Presssitz aufnehmen kann oder diesen freigibt. In jüngerer Zeit haben Schrumpfvorrichtungen eine große Verbreitung gefunden, bei denen der jeweilige Werkzeughalter mithilfe einer Induktionsspule beheizt wird. Dies hat den Schrumpfprozess wesentlich beschleunigt, effizienter und leichter handhabbar gemacht und daher zu seiner weiten Verbreitung beigetragen.

Die erste für den praktischen Einsatz brauchbare Schrumpfvorrichtung wird in der Patentliteratur durch die deutsche Patentanmeldung DE 199 15 412 beschrieben.

Die bisher bekannten Schrumpfvorrichtungen weisen allesamt den Nachteil auf, dass sie relativ groß sind. Denn sie bedienen sich eines mehr oder minder großen Schaltschranks, in dem sich die Leistungselektronik und meist auch die zugehörige Steuerung befinden, und der der neben der Induktionsspule auf oder in einem Tischgestell untergebracht ist. Die bekannten Schrumpfgeräte bilden daher eine de praxi immobile Station, zu der die Werkzeughalter, deren Werkzeug zu wechseln ist, transportiert werden müssen, um sie nach dem Werkzeugwechsel wieder zu der jeweiligen Werkzeugmaschine zurück zu transportieren. Dies ist bisher hingenommen worden.

### Das der Erfindung zugrunde liegende Problem

Angesichts dessen ist es die Aufgabe der Erfindung eine Schrumpfvorrichtung anzugeben, die wesentlich kompakter ist, als die bisher bekannten Schrumpfvorrichtungen und die daher einen geeigneten Ausgangspunkt bildet, um eine Schrumpfvorrichtung für den mobilen Einsatz zu konzipierenidealerweise derart, dass die Schrumpfvorrichtung ein nach Art eines kleinen Koffers zu transportierendes Gerät ist, welches vom Bediener neuartig verwendet werden kann, indem es kurzerhand an die einem Werkzeugwechsel zu unterziehen Werkzeugmaschine gebracht und dort eingesetzt wird, um vor Ort an der Maschine einen Werkzeugwechsel vorzunehmen.

Dies schließt selbstverständlich nicht aus, dass die Schrumpfvorrichtung auch in herkömmlicher Weise stationär an einer entsprechenden Haltevorrichtung verwendet werden kann, die mobile Verwendung ist jedoch bevorzugt.

### Die erfindungsgemäße Lösung gemäß Anspruch 1

Die Lösung dieses Problems erfolgt durch eine Schrumpfvorrichtung zum Ein- und Ausspannen von einen Werkzeugschaft aufweisenden Werkzeugen gemäß des Anspruchs 1.

Die Schrumpfvorrichtung umfasst eine Werkzeugaufnahme, die eine an ihrem freien Ende offene Hülsenpartie aus elektrisch leitendem Werkstoff zur reibschlüssigen Aufnahme des Werkzeugschafts aufweist. Darüber hinaus gehört zu der Schrumpfvorrichtung eine die Hülsenpartie der Werkzeugaufnahme umfassende, mit einem vorzugsweise hochfrequenten (und idealerweise mit einer Frequenz von meist mehr als 1 kHz aufweisenden) Wechselstrom beaufschlagte, als Ring- oder Zylinderspule ausgebildeten Induktionsspule zum Erwärmen der Hülsenpartie. Dabei trägt die Induktionsspule an ihrem Außenumfang einen ersten Mantel aus magnetisch leitfähigem und elektrisch nicht leitfähigem Material, etwa aus Ferrit oder aus einem Metallpulverwerkstoff. Elektrisch nicht leitfähiges Material im Sinne der Erfindung muss nicht unbedingt ein Isolator sein. Ein Material gilt dann als nichtleitend, wenn die durch Magnetfelder induzierten Wirbelströme nur eine geringfügige oder keine Erwärmung im Material verursachen. Bestandteil der erfindungsgemäßen Schrumpfvorrichtung sind darüber hinaus Leistungshalbleiterbauelemente zur Herstellung eines die Induktionsspule speisenden Wechselstroms. Typischerweise kommen hier sogenannte IGBT zum Einsatz. Es können aber auch Thyristoren oder MOSFET verwendet werden. Zu der erfindungsgemäßen Schrumpfvorrichtung gehört auch ein im Regelfall aus Kunststoff bestehendes Induktionsspulengehäuse. Ein solches Induktionsspulengehäuse entfaltet typischerweise keinerlei oder zumindest keine spürbare magnetische Abschirmwirkung. Es dient allein dazu die in ihm befindlichen Bauteile vor Einflüssen von außen zu schützen und zugleich zu verhindern, dass die Bedienungsperson womöglich mit Spannung führenden Teilen in Kontakt kommen kann. Die erfindungsgemäße Schrumpfvorrichtung zeichnet sich dadurch aus, dass die Induktionsspule und ihr erster Mantel am Außenumfang von einem zweiten Mantel umgeben sind. Dieser zweite Mantel besteht aus magnetisch nicht leitfähigem und elektrisch leitfähigem Material. Er ist so ausgelegt, dass ein etwaiges Streufeld elektrische Ströme in ihm induziert und so dem Streufeld Energie entzieht und es damit schwächt. Das bedeutet, dass er das in seiner Umgebung befindliche Streufeld total eliminiert oder zumindest soweit herabsetzt, dass der in seiner unmittelbaren Umgebung nun noch vorhandene Rest des Streufeldes - vorzugsweise ohne weitere Maßnahmen oder stattdessen im Verbund mit weiteren, flankierenden Maßnahmenso gering ist, dass es keinen negativen Einfluss auf dort angeordnete Leistungshalbleiterbauelemente ausübt.

Weiterhin zeichnet sich diese erfindungsgemäße Lösung dadurch aus, dass zumindest die Leistungshalbleiterbauelemente gemeinsam mit der Induktionsspule in einem Induktionsspulengehäuse untergebracht sind. Das Induktionsspulengehäuse besteht vorzugsweise aus isolierendem Material oder ist außenseitig mit einem solchen überzogen. Es umfasst umfangsseitig bzw. beherbergt in seinem Inneren folgende Bauteile: Die Induktionsspule, deren ersten und deren zweiten Mantel, sowie zumindest die Leistungshalbleiterbaulemente, vorzugsweise auch die unmittelbar im Leistungskreis liegenden Kondensatoren und/oder die Steuerung.

Unter einem "Umfassen" wird als Minimum ein außen Umschließen zumindest entlang des Umfangs der Induktionsspule verstanden. Im Regelfall wird das Induktionsspulengehäuse auch bis in den Bereich der oberen und unteren Stirnseite greifen und diese ganz oder teilweise abdecken. Es besitzt dann eine topfartige Gestalt. Das Induktionsspulengehäuse besitzt, zumindest an seinem Umfang, im Regelfall keine Wanddurchbrüche - außer etwa einem der Funktion geschuldeten lokalen Durchbruch, also für die Zuleitung o. ä.

### Weitere Gestaltungsmöglichkeiten

Vorzugsweise ist die Schrumpfvorrichtung so gestaltet, dass ihre Leistungshalbleiterbauelemente unmittelbar am Außenumfang des zweiten Mantels angeordnet sind. Unmittelbar am Außenumfang kann mit etwa bis zu 60 mm, besser nur bis zu 15 mm maximalem radialem Abstand von der Außenumfangsfläche des zweiten Mantels der Induktionsspule bedeuten. Falls dieser fehlt, ist die Außenumfangsfläche des ersten Mantels maßgeblich. Idealerweise stehen die Leistungshalbleiterbauelemente aber mit mindestens einer ihrer Oberflächen mit dem zweiten Mantel in direktem wärmeleitenden Kontakt, allenfalls unter Vermittlung einer Klebstoffschicht. Der zweite Mantel ist ein vorzugsweise so gestaltet, dass er einen Kühlkörper für die Leistungshalbleiterbauelemente bildet. Der zweite Mantel nimmt dann die in den Leistungshalbleiterbauelementen entstehende Verlustwärme auf und führt sie von diesen ab.

Als besonders günstig hat es sich erwiesen, wenn der zweite Mantel eine oder bevorzugt mehrere Aussparungen besitzt, die jeweils ein Leistungshalbleiterbauelement aufnehmen, bevorzugt so, dass das Halbleiterbauelement jeweils zumindest drei- oder besser vierseitig von dem zweiten Mantel umschlossen ist. Eine solche Aussparung in dem zweiten Mantel bildet einen Bereich, der vor dem restlichen womöglich noch vorhandenen magnetischen Streufeld besonders geschützt ist. Denn die Streufeldlinienvermögen in diese tiefer liegende Aussparung, in der sich das Leistungshalbleiterbauelement befindet, nicht einzudringen. Sie werden stattdessen von den umliegenden, höher bzw. weiter radial auswärtig liegenden Bereichen des zweiten Mantels eingefangen.

Als besonders günstig hat es sich erwiesen, wenn die Schrumpfvorrichtung, die zumindest einen Gleichrichter und zumindest einen Glättungskondensator sowie Schwingkreiskondensatoren umfasst, die an der vorrichtungsinternen Herstellung einer hochfrequenten Wechselspannung zum Speisen der Induktionsspule beteiligt sind, eine Induktionsspule besitzt, um deren Außenumfang herum die Kondensatoren gruppiert sind - im Regelfall so, dass die Kondensatoren, wenn man sie gedanklich um das Zentrum der Spule rotieren lässt, einen Zylinderring bilden, der die Induktionsspule umschließt. Auch hier ist es so, dass die Kondensatoren unmittelbar am Außenumfang des zweiten Mantels der Induktionsspule angeordnet sein sollten. Dabei kann man in diesem Zusammenhang unter dem Begriff "unmittelbar am Außenumfang" einen maximalen radialen Abstand von bis zu 125 mm verstehen, vorzugsweise von bis zu 40 mm, gemessen vom Außenumfang des zweiten Mantels der Induktionsspule. Falls dieser fehlt ist die Außenumfangsfläche des ersten Mantels maßgeblich.

Eine besonders günstige Ausführungsform der Schrumpfvorrichtung, für die nicht nur abhängiger, sondern auch selbstständiger, nicht von vorangehenden Ansprüchen abhängiger Schutz beansprucht wird, besteht zumindest aus einer Induktionsspule zum Ein- und Ausschrumpfen von Werkzeugschäften aus Werkzeughaltern, die von einem ersten Mantel umgeben ist, der aus magnetisch leitfähigem und elektrisch nichtleitfähigem Material besteht, wobei die Induktionsspule und ihr erster Mantel von einem zweiten Mantel umgeben sind, der aus magnetisch nicht leitfähigem und elektrisch leitfähigem Material besteht. Für den zweiten Mantel gilt das bereits zuvor Gesagte. Idealerweise ist dieser zweite Mantel auch hier so ausgelegt, dass in ihm unter dem Einfluss eines ihn durchdringenden Streufeldes der Induktionsspule Wirbelströme erzeugt werden, die an der Außenoberfläche des zweiten Mantels zu einer Beseitigung des Streufeldeinflusses führen. Hier kann man sich gegebenenfalls das Prinzip der sogenannten Gegeninduktion zu Nutze machen. In dem zweiten Mantel werden durch das ihn durchdringende Streufeld Wirbelströme erzeugt, die ihrerseits ein Gegenfeld aufbauen, das das störende Streufeld beseitigt, zumindest soweit, dass im Nahbereich des zweiten Mantels Leistungshalbleiterbauelemente untergebracht werden können ohne dauerhaft Schaden zu nehmen.

Eine andere besonders günstige Ausführungsform der Schrumpfvorrichtung, für die nicht nur abhängiger, sondern auch selbstständiger, nicht von vorangehenden Ansprüchen abhängiger Schutz beansprucht wird, besteht aus einer Induktionsspule zum Ein- und Ausschrumpfen von Werkzeugen aus Werkzeughaltern, die zusammen mit den ihr zugeordneten, zum Herstellen der die Induktionsspule speisenden, ggü. der Netzspannung umgewandelten Wechselspannung erforderlichen Leistungshalbleiterbauelementen im Induktionsspulengehäuse untergebracht ist, das sie umgibt. Vorzugsweise sind auch noch weitere Bauteile, wie etwa im Leistungskreise liegende Kondensatoren und/oder ein Gleichrichter und/oder ein Trafo und/oder die elektronische Steuerung innerhalb des Induktionsspulengehäuses untergebracht. Ein zweiter Mantel ist bei dieser Ausführungsform nicht vorhanden. Er kann ggf. dadurch substituiert werden, dass die Leistungshalbleiterbauelemente und/oder die Steuerelektronik und/oder die Gleichrichter ihrerseits jeweils geschirmte Gehäuse besitzen oder in geschirmten Compartments untergebracht sind. Dabei sind vorzugsweise zumindest die Leistungshalbleiterbauelemente aktiv gekühlt, etwa mit Hilfe der Kühlmittelversorgung der Werkzeugmaschine. Dieser Weg ist ist mit höherem Aufwand möglich und wird daher in das Schutzbegehren eingeschlossen.

Auf diese Art und Weise erhält man eine besonders kompakte Schrumpfvorrichtung, die nicht mehr auf einen separaten, neben der Schrumpfvorrichtung stehenden, mehr oder minder großen Schaltschrank angewiesen ist, in dem diese Bauteile separat untergebracht sind. Damit kommt man dem Ziel nach einem mobilen Schrumpfgerät ein gutes Stück näher.

Vorzugsweise sind alle Varianten der erfindungsgemäßen Schrumpfvorrichtung so gestaltet, dass die der Werkzeugaufnahme abgewandte Stirnseite der Induktionsspule mit einer Abdeckung aus magnetisch leitfähigem und elektrisch nichtleitfähigem Material versehen ist. Idealerweise ist diese Abdeckung als ein derartiger Polschuh ausgebildet, der die gesamte Stirnfläche der Induktionsspule vollflächig überdeckt. Das ist hier besonders wichtig, um den Außenraum von einem schädlichen Streufeld freizuhalten. In Ausnahmefällen gilt, dass die Abdeckung die gesamte Stirnfläche der Induktionsspule wenn nicht physisch, dann aber magnetisch vollflächig überdeckt.

Als besonders günstig hat es sich erwiesen, wenn die Abdeckung örtlich, im Zentrum nahe der Hülsenpartie, einen Abschirmkragen aufweist, der in Richtung der Längsachse L vorzugsweise um mindestens den zweifachen Betrag des Werkzeugdurchmesser über die freie Stirnseite der Hülsenpartie des Werkzeughalters aufragt. Ein solcher Abschirmkragen verhindert, dass der der Hülsenpartie nahe Werkzeugschaft einem schädlichen Streufeld ausgesetzt ist bzw. Ausgangspunkt für ein solches Streufeld ist, das sich von dort aus in die Umgebung erstreckt und den zu vermeidenden schädlichen Einfluss auf die im unmittelbaren Nahbereich der Induktionsspule angeordneten Leistungshalbleiterbauelemente ausübt.

Günstig ist es, wenn auch die der Werkzeugaufnahme zugewandte Stirnseite der Induktionsspule durch ein magnetisch leitendes und elektrisch nicht leitendes Material übergriffen und vorzugsweise bis auf die Aufnahmeöffnung für den Werkzeughalter vollständig abgedeckt wird.

Im Rahmen einer besonders bevorzugten Ausführungsform ist vorgesehen, dass die Schrumpfvorrichtung mindestens eine elektrische Platine besitzt, die unmittelbar am Außenumfang der Induktionsspule angeordnet ist oder den Außenumfang der Induktionsspule vorzugsweise nach Art eines in Umfangsrichtung überwiegend oder vollständig in sich geschlossenen Rings umgreift und die im Leistungskreis liegenden Kondensatoren und/oder die Leistungshalbleiterbauelemente elektrisch kontaktiert. Als Platine wird hier vorzugsweise eine etwa mindestens 0,75 mm dicke Platte mit darauf aufgebrachten Leiterbahnen aus metallischem Material verstanden, alternativ kann aber auch eine mit metallischen Leiterbahnen versehene Folie zum Einsatz kommen. Besonders günstig ist es, wenn die Platine eine Platinenringscheibe ist, deren Rotationssymmetrieachse bevorzugt koaxial, ansonsten parallel zur Längsachse der Induktionsspule verläuft.

Im Idealfall sind zwei Platinenringscheiben vorhanden, zwischen denen entlang des Umfangs der Induktionsspule die im Leistungskreis liegenden Kondensatoren angeordnet sind.

Im Rahmen eines besonders bevorzugten Ausführungsbeispiels ist vorgesehen, dass der zweite Mantel einen oder mehrere Kühlkanäle bildet, die vorzugsweise in seinem Inneren verlaufen, wenn man den zweiten Mantel als Ganzes betrachtet. Zu diesem Zweck kann der zweite Mantel zwei- oder mehrteilig ausgeführt sein. Die einzelnen Teile des Mantels sind dann gegeneinander abgedichtet. Dies vereinfacht die Fertigung innenliegender Kühlkanäle wesentlich.

Eine andere besonders günstige Ausführungsform der Schrumpfvorrichtung, für die nicht nur abhängiger, sondern auch selbstständiger, nicht von vorangehenden Ansprüchen abhängiger Schutz beansprucht wird, ist eine Schrumpfvorrichtung, die sich dadurch auszeichnet, dass die Schrumpfvorrichtung eine Kupplung zum Befestigen der Schrumpfvorrichtung an der Aufnahme einer Werkzeugmaschinenspindel aufweist. Auch mit dieser Ausgestaltung kommt man dem Ziel eine praxistauglich einsetzbare mobile Schrumpfvorrichtung zu schaffen wesentlich näher. Denn es ist gefährlich mit einem mobilen Schrumpfgerät zu arbeiten, das nur irgendwie in der Nähe der Werkzeugmaschine frei liegt, ohne irgendwie betriebssicher befestigt zu sein. Dieses Problem entfällt mit der erfindungsgemäßen Kupplung. Die Kupplung ermöglicht es die Schrumpfvorrichtung nach dem Ausbau des einem Werkzeugwechsel zu unterwerfenden Schrumpffutters an dessen Stelle an der Maschinenspindel zu befestigen. Hier wird die Schrumpfvorrichtung für die Dauer ihres Betriebs sicher gehalten und kann anschließend schnell wieder abgekoppelt und entfernt werden.

Die Kupplung kann in einer Variante auch dazu verwendet werden, um die Schrumpfvorrichtung im Werkzeugmagazin der Werkzeugmaschine aufzubewahren. Aus dem Magazin heraus kann sie durch den Werkzeugwechsler automatisch in die Maschinenspindel eingesetzt werden.

In einer weiteren Variante kann der Werkzeugwechsler die Schrumpfvorrichtung aus dem Werkzeugmagazin herausholen, aber nicht, um sie in die Maschinenspindel einzusetzen, sondern um sie direkt an eine in der Maschinenspindel eingespannte Schrumpfaufnahme heranzuführen und das Werkzeug ein- oder auszuschrumpfen. Auch hierzu ist die der Schrumpfvorrichtung eigene Kupplung besonders voeteilhaft.

Idealerweise ist die Schrumpfvorrichtung zudem so beschaffen, dass sie dann, wenn sie eine interne Kühlung aufweist, durch das Kühlsystem der Werkzeugmaschine mit Kühlmittel gespeist werden kann.

Besonders zweckmäßig ist es die Schrumpfvorrichtung so zu gestalten, dass die Induktionsspule mit ihrem ersten und, soweit vorhanden, mit ihrem zweiten Mantel und mindestens mit den Leistungshalbleiterbauelementen und/oder den Kondensatoren und/oder idealerweise auch die Elektronik zum Ansteuern der Leistungshalbleiterbauelemente im Inneren eines Spulengehäuses oder Spulengehäuserings untergebracht ist, der oder das zumindest den Umfang der Induktionsspule umschließt und vorzugsweise auch eine, besser beide Stirnseiten der Induktionsspule zumindest teilweise übergreift. Auf diese Art und Weise ergibt sich eine kompakte Einheit, in der gegebenenfalls alle betriebsnotwendigen Bauteile untergebracht sind und die durch das gemeinsame Gehäuse gegen Einflüsse von außen geschützt werden und zuverlässig vor einer Berührung spannungführender Teile durch den Bediener abgeschirmt sind.

Idealerweise ist das Spulengehäuse mit einem Stecker, typischerweise einem Schukostecker (vorzugsweise in Gestalt eines am Ende einer flexiblen Zuleitung befestigten Steckers), zum unmittelbaren Einspeisen von einphasiger Netzwechselspannung aus dem öffentlichen Netz (vorzugsweise 110 V oder 230 V) versehen. Dies gestattet es die Schrumpfvorrichtung nahezu überall zu betreiben. Es lediglich eine der für Elektrogeräte üblichen Steckdosen benötigt und ggf. ein übliches Verlängerungskabel. Es versteht sich, dass die Erfindung nicht zwingend auf diese besonders bevorzugte Art der Stromversorgung beschränkt ist. Die Stromversorgung kann auch 3-phasig und mit anderen Spannungen erfolgen, je nachdem, welche Leistung im Einzelfall notwendig ist und welche Stromversorgung am jeweiligen Standort zur Verfügung steht. Natürlich sind auch andere Spannungen möglich, insbesondere in Ländern die eine andere Netzspannung im öffentlichen Netz verwenden.

Alternativ hatte sich als besonders günstig erwiesen die Schrumpfvorrichtung mit einer Batterie zu versehen, die sie speist. Auch ein solches Gerät kann hochmobil sein. Es bietet sich dann an ein Fahrgestell, etwa nach Art einer sehr wendigen Sackkarre, vorzusehen, dass im unteren Bereich die Batterie trägt, etwa eine Fahrzeug-Starter Batterie, und beispielsweise in seinem oberen Bereich die Schrumpfvorrichtung bereithält.

Darüber hinaus wird auch Schutz für ein gesamtes Schrumpfsystem beansprucht, das aus einer Schrumpfvorrichtung der erfindungsgemäßen Art besteht und das sich dadurch auszeichnet, dass zu dem Schrumpfsystem zusätzlich unterschiedliche, an der Schrumpfvorrichtung befestigbare Kupplungen gehören, mittels derer die Schrumpfvorrichtung an der Spindel einer Werkzeugmaschine festgesetzt werden kann. Dies gestattet es die Schrumpfvorrichtung an unterschiedlich ausgerüsteten Werkzeugmaschinenspindeln zu befestigen, sodass es nicht mehr darauf ankommt, ob die Werkzeugmaschinenspindel zum Einziehen beispielsweise einer HSK Kupplung oder einer Steilkegelkupplung ausgerüstet ist.

Weitere Ausgestaltungsmöglichkeiten, Wirkungsweisen und Vorteile sind der nachfolgend unter Zuhilfenahme der Figuren vorgesehenen Beschreibung der Ausführungsbeispiele zu entnehmen.

Zwischen dem ersten und zweiten Mantel ist vorzugsweise ein Zwischenmantel verortet. Dieser dient vorzugsweise als kühlmittelführendes Element um den zweiten Mantel bzw. die darauf angebrachten Halbleiterelemente vor Überhitzung zu schützen. Im Gegensatz zum zweiten Mantel ist es dabei vorzugsweise nicht gespalten um eine einfache Kühlmittelführung zu gewährleisten. Daher ist der Zwischenmantel entweder zumindest gegenüber dem zweiten Mantel elektrisch (nicht thermisch) isoliert oder er besteht von vornherein aus elektrisch nicht leitenden Material. Es versteht sich von selbst, dass die Kühlmittelführung gegenüber den anderen Bauteilen der Schrumpfvorrichtung abgedichtet ist. Alternative Konzepte zur Kühlung des zweiten Mantels ohne einen besonders ausgebildeten Zwischenring sind denkbar. Natürlich kann dieser Zwischenmantel auch so ausgebildet sein, dass er ergänzend als (zusätzliche) Abschirmung dient.

### Figurenliste

Die Figur 1 zeigt ein erstes Ausführungsbeispiel im Mittel-Längsschnitt.
Die Figur 2 zeigt das erste Ausführungsbeispiel in einem Mittel-Längsschnitt, der im Vergleich zur Figur 1 um 90° um die Längsachse L gedreht ausgeführt ist.

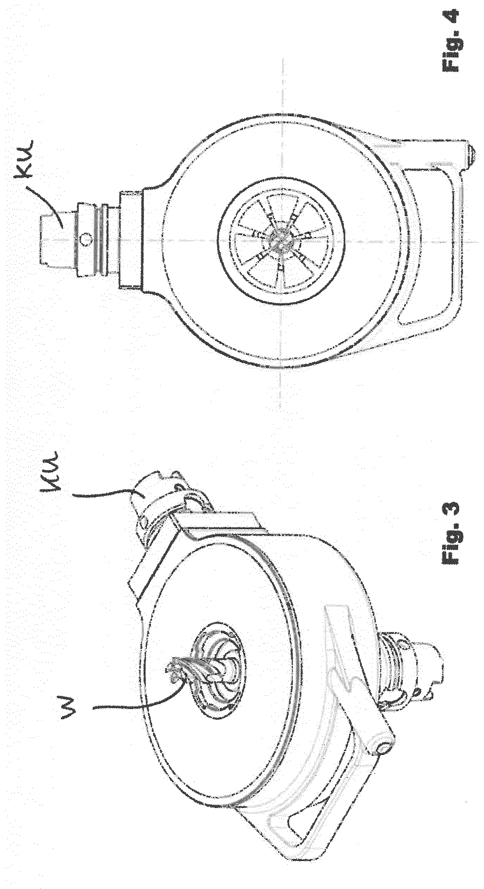

Die Figur 3 zeigt das erste Ausführungsbeispiel in perspektivischer Ansicht schräg von oben, bei abgenommenem Abschirmkragen.
Die Figur 4 zeigt das erste Ausführungsbeispiel frontal von oben, mit aufgesetztem Abschirmkragen.
Die Figur 5 zeigt den zweiten Mantel des ersten Ausführungsbeispiels, ausgerüstet mit Leistungshalbleiterbauelementen.

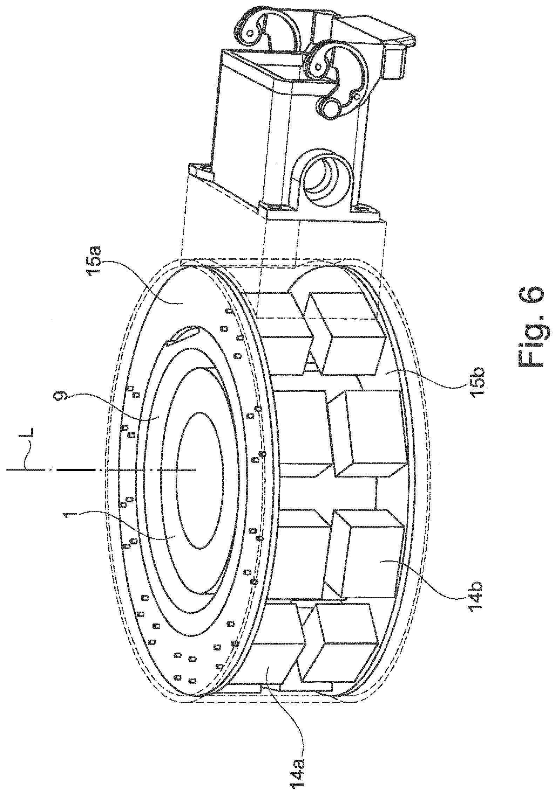

Die Figur 6 zeigt ein zweites Ausführungsbeispiel, das sich vom ersten Ausführungsbeispiel aber nur durch die Art der Befestigung an der Werkzeugmaschine oder am Stativ unterscheidet und insofern im Hinblick auf die Anordnung der Kondensatoren und der Platinen bzw. Leiterplatten, die hier gezeigt wird, mit dem ersten Ausführungsbeispiel identisch ist.
Die Figur 7 zeigt den Schaltplan einer Schaltung zum Speisen der Induktionsspule die erfindungsgemäß für die Ausführungsbeispiele zum Einsatz kommen kann.

### Ausführungsbeispiele

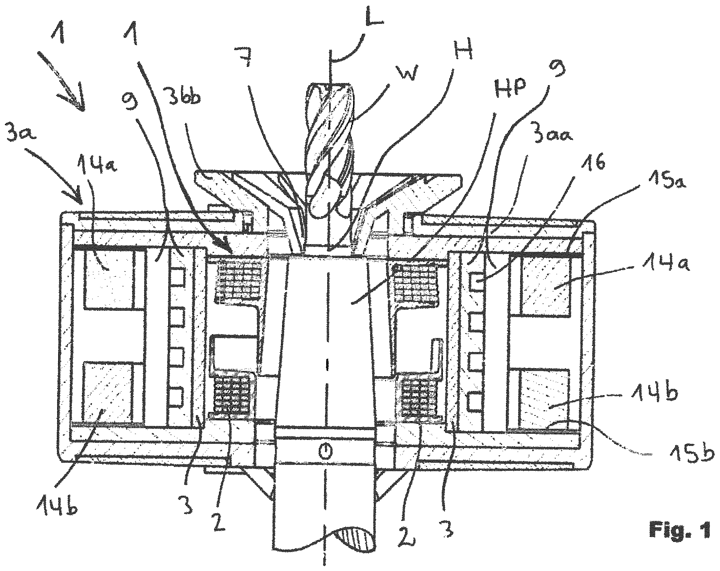

Die Figur 1 gibt einen ersten grundlegenden Überblick über die erfindungsgemäße Vorrichtung.

### Das Grundprinzip des induktiven Ein- und Ausschrumpfens

Gut zu erkennen ist hier die Induktionsspule 1 mit ihren einzelnen Windungen 2, in deren Zentrum ein Werkzeughalter 4 eingeschoben wird um den Halteschaft H eines Werkzeugs W in die Hülsenpartie HP ein- oder auszuschrumpfen. Das Funktionsprinzip, das dem Ein- und Ausschrumpfen zu Grunde liegt, ist näher in der deutschen Patentanmeldung DE 199 15 412 A1 beschrieben. Deren Inhalt wird hiermit zum Gegenstand dieser Anmeldung gemacht.

### Die Abschirmung der Induktionsspule mit magnetisch leitenden und elektrisch nichtleitenden Mitteln

Die vorliegende Erfindung stellt hohe Anforderungen an die Abschirmung der Induktionsspule, auch an die konventionelle, ihrer Art nach bereits bekannte Abschirmung.

An ihrem Außenumfang ist die Induktionsspule mit einem ersten Mantel 3 aus elektrisch nicht leitendem und magnetisch leitendem Material versehen. Typischerweise besteht der erste Mantel 3 entweder aus einem Ferrit oder einem Metallpulver bzw. Metallsinterwerkstoff, dessen einzelne Partikel elektrisch isolierend voneinander getrennt sind und die auf diese Art und Weise insgesamt gesehen magnetisch leitend und elektrisch nichtleitend sind. Um patentrechtlich motivierte Umgehungsversuche auszuschließen sei gesagt, dass in Ausnahmefällen stattdessen auch ein geblechter Mantel aus geschichteten Transformatorenblechen denkbar ist, die untereinander durch isolierende Lagen getrennt sind. In der überwiegenden Zahl der Fälle wird ein solcher geblechter Mantel aber den gewünschten Zweck nicht erfüllen.

Besonders bevorzugt ist der erste Mantel 3 so ausgeführt, dass er in Umfangsrichtung völlig in sich geschlossen ist, also die Umfangsfläche der Spule vollständig überdeckt, so dass auch in der Theorie keinerlei "magnetische Lücken" verbleiben, abgesehen von irrelevanten lokalen Durchbrüchen, wie etwa einzelnen und/oder kleinen lokalen Bohrungen o. ä.

Im Ausnahmefall ist es denkbar, den Mantel 3 so auszuführen, dass er aus einzelnen, den Umfang abdeckenden Segmenten besteht, die zwischen sich gewisse Freiräume aufweisen - nicht figürlich dargestellt. Derartiges kann im Einzelfall mehr schlecht als recht funktionieren, wenn die radiale Dicke der einzelnen Segmente in Relation zu der Dimension der Freiräume so groß gewählt ist, dass das von innen her in den jeweiligen Freiraum eintretende Feld von den Segmenten noch im Bereich des Freiraums angezogen wird und dadurch kein nennenswertes Streufeld die Freiräume passieren kann.

Vorzugsweise hat die Abschirmung aus magnetisch leitendem und elektrisch nichtleitendem Material mit dem ersten Mantel nicht bereits ihr Bewenden.

Stattdessen schließt sich an mindestens einer, besser beiden Stirnseiten des ersten Mantels 3 eine magnetische Abdeckung 3a, 3b aus dem besagten Material an, die im Regelfall den ersten Mantel 3 kontaktieren.

Auf der dem Werkzeughalter abgewandten Stirnseite der Induktionsspule ist die magnetische Abdeckung 3a vorzugsweise als ganz oder bevorzugt abschnittweise auswechselbarer Polschuh ausgebildet, d. h. als ringförmiges Gebilde mit einer zentralen Öffnung, die einen Durchlass für das ein- oder auszuspannende Werkzeug bildet. Der Begriff "Auswechselbar" beschreibt vorzugsweise eine werkzeuglose Auswechselbarkeit, die idealerweise mit Hilfe einer mit bloßer Hand betätigbaren Verbindung realisiert wird, etwa einer Bajonettverbindung. Auf diese Art und Weise können Werkzeughalter bearbeitet werden, die unterschiedlich große Werkzeugschaftdurchmesser aufnehmen. Dennoch ist gewährleistet, dass die Stirnseite der jeweiligen Hülsenpartie HP auf der Spuleninnenseite zur Anlage gegen den Polschuh gelangt.

Auf der dem Werkzeughalter zugewandten Stirnseite der Induktionsspule ist die magnetische Abdeckung 3b vorzugsweise als in sich ebene Ringscheibe ausgestaltet, die die Wicklungen der Induktionsspule idealerweise vollständig übergreift und einen zentralen Durchlass für die Hülsenpartie aufweist.

Für die Erfindung ist es zwar nicht obligatorisch aber in höchstem Maße vorteilhaft, wenn die stirnseitig vorgesehenen magnetischen Abdeckungen 3a, 3b (zumindest lokal, vorzugsweise zu mindestens 75%, idealerweise vollständig rundum) in radialer Richtung über den ersten Mantel 3 hinausragen, vorzugsweise um ein Radialmaß, das die radiale Dicke des ersten Mantels 3 um ein Vielfaches übertrifft, in vielen Fällen um mindestens das 4-fache. Der radiale Überstand sollte vorzugsweise unter einem Winkel von 75° bis idealerweise 90° zur Längsachse L verlaufen. Auf diese Art und Weise entsteht ein in Umfangsrichtung um die Spule herumlaufender, verstärkt "geschirmter Graben", dessen erfindungsgemäße Funktion später noch näher erläutert wird.

Fig. 1 zeigt eine besonders bevorzugte Ausführungsform, bei der der Polschuh aus einer dauerhaft an Ort und Stelle verbleibenden Polringscheibe 3aa besteht, die außenseitig mit einem isolierenden Material belegt ist, beispielsweise Kunststoff. An der Polringscheibe 3aa ist auswechselbar ein Abschirmkragen 3ab befestigt. Wie man sieht stehen die Polringscheibe 3aa und der Abschirmkragen 3ab vorzugsweise ohne magnetische Unterbrechung miteinander in Verbindung. Dies wird dadurch erreicht, dass der Abschirmkragen die Polringscheibe kontaktiert, vorzugsweise in der er von oben her auf ihr aufliegt.

Wie die Fig. 1 ebenfalls zeigt kann es besonders günstig sein, wenn der Abschirmkragen einen Anschlagabschnitt AS zur Anlage an der Hülsenpartie aufweist, der bis in das Innere der Induktionsspule hineinragt.

Wie man ebenfalls gut an Hand der Fig. 1 sieht ist es in vielen Fällen besonders günstig, wenn der Abschirmkragen in einzelne Segmente aufgeteilt ist, die schräg mit einer Bewegungskomponente in radialer und einer Bewegungskomponente in Richtung parallel zur Längsachse L verschiebbar sind - so dass sowohl der freie Innendurchmesser des Abschirmkragens verstellbar ist, der als Werkzeugdurchlass zur Verfügung steht, als auch die Tiefe mit der das der Hülsenpartie zugewandte stirnseitige Ende des Abschirmkragens in das Innere der Induktionsspule eintaucht.

Idealerweise weist der Abschirmkragen jedenfalls eine kegelförmige Gestalt bzw. einen sich in Richtung der Spulenlängsachse zur Werkzeugspitze hin erweiternden Verlauf auf.

Um die für den erfindungsgemäßen Zweck wünschenswerte, qualitativ besonders hochwertige Abschirmung zu gewährleisten ragt der Abschirmkragen in Richtung der Längsachse L um mindestens den zweifachen besser um mindestens den 2,75 fachen Betrag des Werkzeugdurchmesser über die freie Stirnseite der Hülsenpartie des Werkzeughalters auf.

### Die zusätzliche Abschirmung mit einem elektrisch leitenden und magnetisch nicht leitenden Mittel

Auch eine sorgfältige Abschirmung mithilfe des ersten Mantels 3 und den magnetischen Abdeckungen 3a, 3b vermag nicht zu verhindern, dass am Außenumfang der Induktionsspule bzw. an oder im Bereich der Umfangsoberfläche des ersten Mantels 3 noch ein gewisses, für Halbleiterbauteile schädliches Streufeld anzutreffen ist. Aufgrund dessen verbietet es sich eigentlich in diesem Bereich elektronische Bauteile anzuordnen, die empfindlich auf durch das Streufeld induzierte Störspannungen reagieren. So, wie das insbesondere bei Halbleiterbauteilen der Fall ist, die einen maßgeblichen Teil des in Resonanznähe betriebenen Schwingkreises bilden, der zur Speisung der Induktionsspule eingesetzt wird.

Um die Abschirmung noch weiter zu verbessern ist erfindungsgemäß vorgesehen die Induktionsspule und ihren ersten Mantel 3 an dessen Außenumfang von einem zweiten Mantel 9 zu umgeben - zumindest bei Verzicht auf eine Kühlung des zweiten Mantels vorzugsweise so, dass der erste und der zweite Mantel einander berühren, idealerweise auf dem überwiegenden bzw. gesamten Teil ihrer einander zugewandten Umfangsflächen.

Dieser zweite Mantel 9 ist aus magnetisch nicht leitfähigem und elektrisch leitfähigem Material hergestellt. Unter "elektrisch leitfähig" wird hier ein nicht nur lediglich lokal, sozusagen "kornweise" elektrisch leitfähiges Material verstanden, sondern ein Material, das in erfindungsrelevantem Umfang die Ausbildung von Wirbelströmen zulässt, dazu sogleich.

Das Besondere an dem zweiten Mantel ist, dass er bevorzugt so ausgelegt und bevorzugt in radialer Richtung so dick ausgelegt ist, dass in ihm unter dem Einfluss des ihn durchdringenden Streufeldes der Induktionsspule Wirbelströme erzeugt werden, die eine Schwächung des unerwünschten Streufeldes bewirken. Man macht sich hier also das Prinzip der aktiven Abschirmung durch ein Gegenfeld zu nutze. Dadurch kann erreicht werden, dass an der Außenoberfläche des zweiten Mantels das Streufeld um mehr als 50% verringert wird, idealerweise um mindestens 75%. Entscheidend ist, dass das Streufeld an der Oberfläche des zweiten Mantels jedenfalls soweit verringert wird, dass dort gefahrlos Halbleiterbauteile angeordnet werden können. Entscheidend ist, dass dieser zweite Mantel in radialer Richtung bzw. magnetisch durch den ersten Mantel von der Induktionsspule getrennt ist, da er sich sonst zu stark aufheizen würde - was hier nicht der Fall ist, da er nicht im Hauptfeld liegt sondern nur im Streufeld.

Für den hier im Zusammenhang mit dem zweiten Mantel verwendeten Begriff "Mantel" gilt das oben im Zusammenhang mit ersten Mantel Definierte sinngemäß. Allerdings bedeutet der Begriff "Mantel" im Zusammenhang mit dem zweiten Mantel nicht, dass ein in Umfangsrichtung endloser Rohrabschnitt zum Einsatz kommen muss. Stattdessen ist der Mantel vorzugsweise in einzelne Segmente aufgeteilt, die elektrisch voneinander isoliert sind, etwa durch mit Klebstoff oder Kunststoff gefüllte Fugen. Diese Ausgestaltungsart dient dazu einen Reihenkurzschluss zu verhindern, wie er bei einem endlosen Rohrabschnitt die Folge wäre, wenn an einem Leistungshalbleiterbauelement ein Spannungsdurchschlag in den zweiten Mantel erfolgt und alle Leistungshalbleiterbauelemente längs des zweiten Mantels auf dem gleichen Potential am liegen. Wichtig ist aber, dass die einzelnen Segmente jeweils so groß ausgeführt sind, dass das Streufeld in ihnen feldschwächende Wirbelströme induzieren kann, im Einzelfall ist dabei kein Vollmantel erforderlich, sondern es kann eine leitfähige (in Ansehung der konkreten individuellen Verhältnisse) hinreichend dick dimensionierte Gitterstruktur ausreichen.

Zu betonen ist an dieser Stelle, dass ein lediglich zu mechanischen Schutzzwecken vorgesehenes, in radialer Richtung dünnwandiges Gehäuse nicht ausreicht, selbst wenn es aus elektrisch leitfähigem Material bestanden haben sollte. Um den gewünschten, erfindungsgemäßen Effekt zu erzielen, ist eine zielgerichtete Auslegung der radialen Wandstärke des zweiten Mantels erforderlich.

Bevorzugtes Material zur Herstellung des zweiten Mantels 9 ist Aluminium.

Der zweite Mantel 9 kann in seinem Inneren vorzugsweise in Umfangsrichtung verlaufende, ggf. schraubenförmig umlaufende Kühlkanäle aufweisen, die letzterenfalls idealerweise ein Gewinde bilden.

In diesem Falle ist es besonders günstig, den zweiten Mantel 9 zwei- oder mehrteilig auszuführen. Dessen erster Teil trägt dann an seinem Umfang in ihn eingearbeitete Kühlkanäle, die dessen zweiter Teil abdichtet.

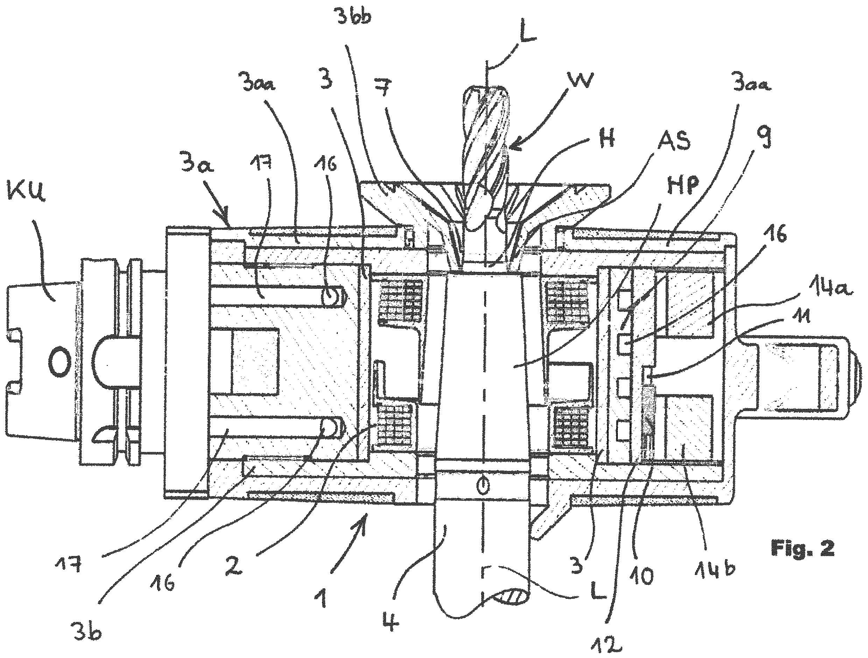

An diesem Punkt ist bereits auf den linken Teil der Fig. 2 hinzuweisen. Hier sieht man die Kühlmittelspeiseleitungen 17, die frisches Kühlmittel am Anfang des oder der Kühlkanäle 16 einspeisen und verbrauchtes Kühlmittel abführen.

### Die besondere Anordnung der Leistungshalbleiterbauelemente, der Kondensatoren und ggf. der elektronischen Steuerung

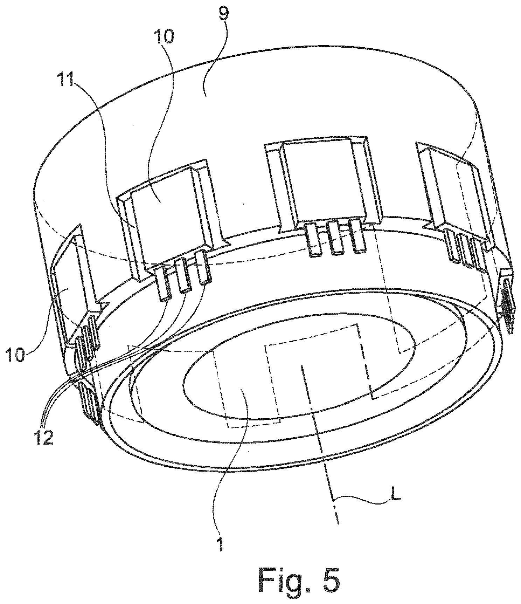

Wie man gut anhand der Fig. 2 und der Fig. 5 sieht, ist der zweite Mantel an seinem Umfang von den nachfolgend noch näher zu erläuternden Leistungshalbleiterbauelementen 10 umgeben, die unmittelbar am Außenumfang des zweiten Mantels angeordnet sind.

Im vorliegenden Fall ist es so, dass die Leistungshalbleiterbauelemente zwei große Hauptflächen haben und vier kleine Seitenflächen. Die großen Hauptflächen sind vorzugsweise mehr als viermal größer als jede der einzelnen Seitenflächen. Die Leistungshalbleiterbauelemente 10 sind so angeordnet, dass eine ihrer großen Hauptflächen in wärmeleitendem Kontakt mit dem zweiten Mantel 9 steht, im Regelfall an dessen Außenumfang. Idealerweise ist die betreffende große Hauptfläche des Leistungshalbleiterbauelements 10 mithilfe eines wärmeleitenden Klebstoffs an die Umfangsoberfläche des zweiten Mantels 9 angeklebt. Der zweite Mantel 9 hat also hier eine Doppelfunktion. Er verbessert also nicht nur die Abschirmung und macht dadurch die Anordnung der Leistungshalbleiterbauelemente in seinem radialen Nahbereich (weniger als 10 cm Entfernung von seiner Umfangsoberfläche) möglich, sondern fungiert optional zugleich als Kühlkörper für die Leistungshalbleiterbauelemente.

Besonders bevorzugt ist der zweite Mantel 9 mit Aussparungen 11 versehen, von denen je eine ein Leistungshalbleiterbauelement aufnimmt, vgl. Fig. 5. Gut zu erkennen ist, dass die Aussparungen 11 idealerweise so gestaltet sind, dass sie das von ihnen aufgenommene Leistungshalbleiterbauelement 10 an vier Seiten vollständig umgeben. Das Leistungshalbleiterelement 10 sitzt auf diese Art und Weise sozusagen in einer Senke und ist dadurch besonders gut abgeschirmt.

Wie man ebenfalls gut sieht, besitzt jedes der Leistungshalbleiterbauelemente 10 drei Anschlüsse 12 zur Spannungsversorgung. Die Anschlüsse 12 jedes Leistungshalbleiterbauelements 10 ragen hier in einen einen Rücksprung 13 bildenden Bereich des zweiten Mantels 9 hinein, vgl. Fig. 5. Dieser optionale Rücksprung 13 erleichtert ggf. die Verkabelung der Anschlüsse 12 des jeweiligen Leistungshalbleiterbauelements 10.

Im erörterten Ausführungsbeispiel hat es allerdings mit der neuartigen Anordnung der Leistungshalbleiterbauelemente 10, noch nicht sein Bewenden. Stattdessen ist hier eine besonders bevorzugte Lösung realisiert, bei der die Kondensatoren 14a, 14b am Außenumfang der Induktionsspule um diese herumgruppiert sind. Bei den Kondensatoren 14a handelt es sich bevorzugt um Glättungskondensatoren die unmittelbarer Bestandteil Teil des Leistungskreises sind, bei den Kondensatoren 14b handelt es sich bevorzugt um Schwingkreiskondensatoren, die ebenfalls unmittelbarer Bestandteil Teil des Leistungskreises sind. Die Kondensatoren 14a, 14b bilden hier, wenn man sie gedanklich um das Zentrum der Spule rotieren lässt, einen Zylinderring. Dieser Zylinderring umgibt die Induktionsspule und vorzugsweise auch die an deren Umfang um diese herumgruppierten Leistungshalbleiterbauelemente. Um die Kondensatoren 14a, 14b elektrisch anzuschließen, sind hier mehrere elektrische Platinen 15a, 15b vorgesehen, die jeweils den Außenumfang der Induktionsspule umgreifen. Jede dieser Platinen 15a, b bildet vorzugsweise eine Ringscheibe. Jeder der Platinen besteht vorzugsweise aus FR4 oder ähnlichen für Platinen gebräuchlichen Materialien. Wie man sieht, ist die Rotationssymmetrieachse jeder der beiden hier als Platinenringscheiben ausgeführten Platinen hier koaxial zur Längsachse der Spule. Optional ist jede der Platinen an der Grabeninnenseite der magnetischen Abdeckungen 3a, 3b befestigt, dort wo die magnetischen Abdeckungen 3a, 3b in radialer Richtung über den zweiten Mantel hinausragen.

Die obere der beiden elektrischen Platinen 15a trägt die Kondensatoren - etwa die Glättungskondensatoren 14a oder die Schwingkreiskondensatoren 14b - deren Anschlussfahnen die Platine durchgreifen oder mithilfe der SMD-Technik mit der Platine verbunden sind, so, dass die Glättungskondensatoren von der Platine herabhängen. Die untere der beiden Platinen ist entsprechend aufgebaut, die Kondensatoren, - etwa die Schwingkreiskondensatoren 14b oder die Glättungskondensatoren 14b - stehen nach oben von ihr ab. Insgesamt ist es so, dass die beiden elektrischen Platinen 15a, b sämtliche Kondensatoren 14a, 14b des die Induktionsspule speisenden Leistungskreises zwischen sich aufnehmen, gesehen in Richtung entlang zur Längsachse der Induktionsspule.

Man kann also sagen dass die Leistungshalbleiter einen ersten gedachten Zylinder bilden, der die Induktionsspule umringt und die Kondensatoren 14a, 14b einen zweiten gedachten Zylinder bilden, der den ersten gedachten Zylinder umringt. Vorzugsweise bilden die gegenüber dem Streufeld nur weniger empfindlichen Kondensatoren den gedachten, äußeren Zylinder, während die auf einen möglichst streufeldarmen Einbauraum angewiesenen Leistungshalbleiterbauelemente den gedachten, inneren Zylinder bilden.

### Die besondere Ausgestaltung der Steuerungsplatine oder anderer Platinen

Es kann erforderlich sein die Platine, auf der die Steuerung sitzt und/oder die Platinen, die die unmittelbar im Leistungskreis liegenden Kondensatoren kontaktieren geschirmt auszuführen.

Zu diesem Zweck kommen vorzugsweise mehrschichtige Platinen zum Einsatz bzw. die sog. Multilayertechnik. Dabei werden zwei oder mehr Platinen aufeinandergelegt. Die Leiterbahnen verlaufen überwiegend bzw. im Wesentlichen im Inneren des so entstandenen Platinenpakets. Zumindest eine außenliegende Hauptfläche des Platinenpakets ist im Wesentlichen vollflächig metallisiert und dient daher als Schirmung.

### Die besondere Versorgung der Induktionsspule

Zunächst sei als allgemeine Bemerkung vorweggeschickt, dass die von Fig. 1 gezeigte Spule vorzugsweise nicht über ihre gesamte Länge hinweg "voll bewickelt" ist. Stattdessen besteht sie bevorzugt aus zwei, im Regelfall im Wesentlichen zylindrischen Wicklungspaketen. Diese bilden jeweils eine Stirnseite der Induktionsspule. Vorzugsweise ist die eine (hier die untere) der beiden Spulen ist in Richtung parallel zur Längsachse L beweglich und damit im laufenden Betrieb so verstellbar, dass immer nur der Bereich der jeweiligen Hülsenpartie erhitzt wird, der der Erhitzung bedarf. Das verhindert eine unnötige Erhitzung und auch die Erzeugung eines unnötig starken Feldes, was sich natürlich entsprechend auf das anzutreffende Streufeld auswirkt. Eine derartige Spule trägt zudem zur Verringerung der Blindleistung bei, da ihr die Wicklungen im Mittenbereich fehlen, die unter dem Gesichtspunkt der möglichst effektiven Beheizung der Hülsenpartie des Werkzeughalters nicht unbedingt benötigt werden, die aber - wenn vorhanden - die Tendenz haben zusätzliche Blindleistung produzieren, ohne eine wirklich wichtigen Beitrag zur Beheizung zu leisten.

Um die Induktionsspule so zu versorgen, dass sie die gewünschte Wirkung entfaltet und die Hülsenpartie eines Werkzeughalters hinreichend schnell aufheizt, genügt es im Regelfall nicht, die Induktionsspule kurzerhand unmittelbar an die 50 Hz Netzwechselspannung anzuschließen.

Stattdessen muss die Frequenz der Spannung, Spannung die Spule gespeist wird, erhöht werden. Das erfolgt im Regelfall elektronisch mithilfe eines Frequenzumrichters. Speist man die Spule nun allerdings einfach mit einen Frequenzumrichter, ohne weitere spezielle Maßnahmen zu treffen, wie in der Praxis bisher häufig geschehen, dann kommt es zu hohen Blindleistungsverlusten.

Diese Blindleistungsverluste sind unter dem Gesichtspunkt der Energieeffizienz nicht weiter relevant, da die Einschaltdauern bei einem Schrumpfgerät klein sind - schon nach wenigen Sekunden Einschaltdauer hat die Induktionsspule die Hülsenpartie eines Werkzeughalters so weit erhitzt, dass der Werkzeugschaft ein- oder ausgebaut werden kann, weshalb die Blindleistungsverluste bisher nicht als störend empfunden wurden.

Die Erfinder haben nun erkannt, dass die Vermeidung von Blindleistungsverlusten gleichwohl wichtig ist, da sie zur Erwärmung unter anderem der Induktionsspule selbst führen. Um die Blindleistungsverluste vermeiden zu können ist erfindungsgemäß vorgesehen, die Induktionsspule über einen Schwingkreis zu versorgen. Bei dem erfindungsgemäßen Schwingkreis schwingt der überwiegende Teil der benötigten Energie periodisch (hochfrequent) zwischen der Induktionsspule und einer Kondensatoreinheit hin- und her. Dadurch muss in jeder Periode bzw. periodisch nur die dem Schwingkreis durch seine Heizleistung und seine sonstige Verlustleistung entzogene Energie nachgespeist werden. Somit entfallen die bisherigen, sehr hohen Blindleistungsverluste. Das führt dazu, dass sich die Bauteile der Leistungselektronik erstmals so stark miniaturisieren lassen, dass - meist bei zusätzlicher Lösung des besonderen Abschirmungsproblems, das dieser Einbau aufweist - sie in das Spulengehäuse integriert werden können. Somit rückt ein tragbares Induktions-Schrumpfgerät in greifbare Nähe, das wegen seines Gesamtgewichts von unter 10 kg vom Benutzer zur Werkzeugmaschine getragen werden kann, um es vor Ort einzusetzen.

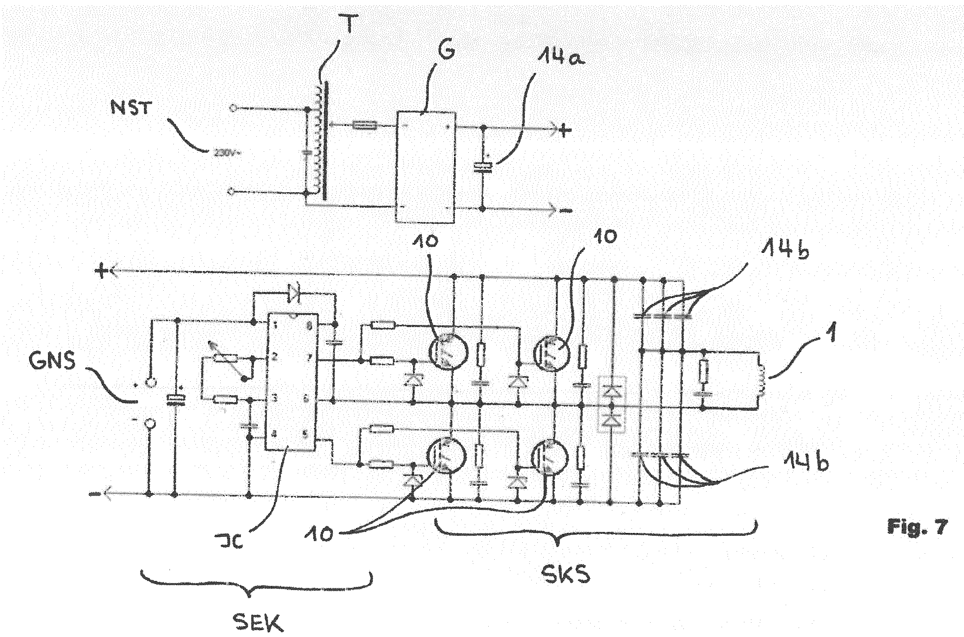

Die die Induktionsspule speisende Leistungselektronik ist vorzugsweise so gestaltet, wie das die Figur 7 wiedergibt und zeichnet sich dann durch folgende Merkmale aus Eingangsseitig wird die Leistungselektronik vorzugsweise mit dem allgemein verfügbaren Netzstrom NST, der in Europa 230 V / 50 Hz / 16Aₘₐₓ (in andern Ländern entsprechende Werte z. B. USA 110 V) beträgt, gespeist. Das wird dadurch, dass die bisherigen Blindleistungen vermieden werden, erstmals möglich, während bisher ein 380 V "Drehstrom"-Anschluss erforderlich war. Dies schließt nicht aus, dass unter besonderen Bedingungen, z. B. hoher Leistungsbedarf, dennoch ein 3-phasiger Drehstromanschluss notwendig wird. Selbstverständlich kann auch bei geringem Leistungsbedarf mit Drehstrom gearbeitet werden.

Der Netzstrom wird dann bevorzugt auf eine höhere Spannung hochtransformiert (Trafo T), um die bei vorgegebener Leistung fließenden Ströme zu verringern. Der aus dem Netz bezogene Strom wird vom Gleichrichter G in Gleichstrom umgewandelt, der seinerseits durch den oder die Glättungskondensatoren 14a geglättet wird.

Mit diesem Gleichstrom wird der eigentliche Schwingkreis SKS gespeist. Das Rückgrat des Schwingkreises bilden die Leistungshalbleiterbauelemente 10, die Schwingkreiskondensatoren 14b und die zum Ein- und Ausschrumpfen dienende Induktionsspule 1. Gesteuert bzw. geregelt wird der Schwingkreis von Steuerelektronik SEK, die im Wesentlichen als IC ausgebildet ist und die über einen eigenen Eingang GNS mit Gleichstrom-Niederspannung gespeist wird, die ggf. hinter dem Gleichrichter G und dem oder den Glättungskondensatoren 14a über einen entsprechenden Spannungsteiler-Widerstand abgegriffen wird.

Die Leistungshalbleiterbauelemente 10 werden vorzugsweise durch Transistoren des Typs "Insulated-Gate Bipolar Transistor" kurz IGBT verwirklicht.

Die Steuerelektronik SEK schaltet die IGBT bevorzugt mit einer Frequenz die die sich am Schwingkreis SKS einstellende Arbeitsfrequenz vorgibt.

Wichtig ist, dass der Schwingkreis SKS niemals genau in Resonanz arbeitet, der bei einer Phasenverschiebung zwischen Spannung U und Strom I von cos ϕ =1 liegt. Dies würde hier zur raschen Zerstörung der Leistungshalbleiterbauelemente 10 durch die Spannungsspitzen führen. Stattdessen ist die Steuerelektronik SEK so gestaltet, dass sie die Leistungselektronik bzw. deren Schwingkreis SKS in einem Arbeitsbereich betreibt, der lediglich nahe der Resonanz bzw. Eigenfrequenz des Systems liegt. Vorzugsweise wird der Schwingkreis so gesteuert bzw. geregelt, dass gilt 0,9 ≤ cos ϕ ≤ 0,99. Besonders günstig sind Werte, die im Bereich 0,95 ≤ cos ϕ ≤ 0,98 liegen. Dies führt nochmals zu einer Vermeidung von Spannungsspitzen und leistet daher der Miniaturisierung weiteren Vorschub.

Am Rande ist noch anzumerken, dass der minimierte Energieverbrauch erstmals einen Batteriebetrieb gestattet. Als geeignete Hochstrombatterie kann im einfachsten Fall eine Kraftfahrzeug-Starterbatterie zum Einsatz kommen,

### Mobile Einheit

Eine Besonderheit der Erfindung ist, dass erstmals eine mobile Schrumpfeinheit möglich wird, die betriebsbereit i. d. R. weniger als 10 kg wiegt, daher und meist auch wegen ihres Designs als "Nur-Spulengehäuse mit Anschlussstecker" leicht getragen bzw. rangiert werden kann. Sie kommt auf Grund dessen "zur Werkzeugmaschine", um für den Einsatz vor Ort an der Werkzeugmaschine verwendet zu werden. Somit kann von dem bisherigen Konzept der stationären Schrumpfmaschine, zu der die Werkzeughalter angeliefert und von der die Werkzeughalter wieder abtransportiert werden müssen werden müssen, um einen Werkzeugwechsel durchzuführen und weiterzuarbeiten, abgegangen werden.

Zunächst sei mit allgemeiner Geltung gesagt, dass zumindest die Komponenten "Induktionsspule, der erste Mantel und, soweit vorhanden, auch der zweite Mantel, die Leistungshalbleiterbauelemente und vorzugsweise auch die Kondensatoren" in einem gemeinsamen Gehäuse untergebracht sind. Idealerweise sind zusätzlich zu der Induktionsspule alle für den Betrieb der Induktionsspule erforderlichen Bauteile einschließlich der Steuerelektronik im gemeinsamen Gehäuse untergebracht.

Vorzugsweise verlässt das Gehäuse nur ein Speisekabel, das zur Spannungsversorgung des so gebildeten Schrumpfgeräts dient und zu diesem Zweck an seinem Ende idealerweise einen Stecker trägt der den werkzeuglosen Anschluss an die Spannungsversorgung ermöglicht. Als Spannungsversorgung kommt hier vorzugsweise Netzspannung zu Einsatz, wie oben erwähnt. Das Ende des Speisekabels ist dann bevorzugt mit einem Schukostecker ausgerüstet, der den jeweiligen nationalen Anforderungen entspricht.

Wenn die Schrumpfvorrichtung von Hand gehalten werden soll, sind vorteilhaft Zentriermittel am Spulengehäuse angebracht, die die zentrische Positionierung der Spule zur Werkzeugachse erleichtern. Die Zentriermittel können beispielsweise als radial bewegliche Finger Fi ausgeführt sein, wie in Fig. 1 und 2 angedeutet.

Als besonders zweckmäßig hat es sich erwiesen, wenn die Vorrichtung mit mindestens einer Kupplung KU versehen ist, die ihr Ankuppeln an der Werkzeugmaschine erlaubt.

Dadurch kann die Vorrichtung einfach an der Werkzeugmaschine befestigt werden und nimmt dann eine arbeitssichere und vor Verschmutzung durch Kühlmittel und Spanpartikel geschützte Arbeitsposition ein.

Diese Kupplung KU entspricht vorzugsweise den gängigen Kupplungsprofilen, wie sie für die mit der erfindungsgemäßen Schrumpfvorrichtung zu bearbeitenden Werkzeughalter zum Einsatz kommen, z. B. einem HSK-Profil, wie von Fig. 2 gezeigt. Um die erfindungsgemäße Schrumpfvorrichtung in eine sichere Arbeitsposition zu bringen ist dann nichts anderes erforderlich, als den einem Werkzeugwechsel zu unterziehenden Werkzeughalter von der Spindel der Werkzeugmaschine abzukuppeln und stattdessen die Schrumpfvorrichtung mit ihrem identischen Kupplungsprofil an die Spindel der Werkzeugmaschine anzukuppeln. Besonders günstig ist es, wenn die Kupplung der Schrumpfvorrichtung betriebsmäßig, von der Schrumpfvorrichtung abgebaut werden kann, vorzugsweise werkzeuglos von Hand (insbes. Bajonettverschluss), Dadurch kann die Kupplung der Schrumpfvorrichtung leicht an den auf der jeweiligen Werkzeugmaschine zum Einsatz kommenden Kupplungstyp angepasst werden - Steilkegelkupplung, HSK usw.

Idealerweise sind die jeweiligen Kupplungen derart an die erfindungsgemäße Schrumpfvorrichtung angeschlossen, dass vom Kühlsystem der Werkzeugmaschine ausgegebene Kühlflüssigkeit / ausgegebener Kühlschmierstoff den mindestens einen Kühlkanal durchströmen kann, den die Schrumpfvorrichtung besitzt, vorzugsweise in ihrem zweiten Mantel - wie oben dargelegt.

Dabei kann zusätzlich eine - vorzugsweise eine (meist benachbart zur Induktionsspule) in die Schrumpfvorrichtung integrierte - Kühleinrichtung vorgesehen sein. In diese wird die Hülsenpartie des Werkzeughalters nach Beendigung des Schrumpfvorgangs hineingesteckt, um sie aktiv auf eine gefahrlose Berührungstemperatur herunterzukühlen. Zweckmäßigerweise wird diese Kühleinrichtung ebenfalls vom Kühlsystem der Werkzeugmaschine gespeist, im Regelfall ebenfalls über die besagte Kupplung. Auf Grund dessen wird auch Schutz für die Verwendung der von einer Werkzeugmaschine ausgegebenen Kühlflüssigkeit zu Kühlungszwecken (Kühlung des zweiten Mantels und/oder des Werkzeughalters) innerhalb eines Schrumpfgeräts beansprucht.

Alternativ kann die Schrumpfvorrichtung auch im Werkzeugmagazin der Werkzeugmaschine aufbewahrt werden. Der Werkzeugwechsler kann die Schrumpfvorrichtung dann entweder automatisch in die Maschinenspindel einsetzen oder sie an eine in der Spindel eingespannte Werkzeugaufnahme heranführen, um ein Werkzeug aus- oder einzuschrumpfen. Im zweiten Fall kann die Energiezuführung über ein Kabel erfolgen, dass über einen Stecker direkt an der Schrumpfvorrichtung angesteckt wird. In beiden Fällen muss die Schrumpfvorrichtung nicht von Hand gehalten werden.

### Bezugszeichenliste

- 1: Induktionsspule
- 2: Windungen (elektrische Wicklung) der induktionsspule
- 3: Erster Mantel
- 3a: stirnseitige magnetische Abdeckung, vorzugsweise in Gestalt eines Polschuhs
- 3aa: Polringscheibe
- 3bb: Abschirmkragen
- 3b: stirnseitige magnetische Abdeckung
- 4: Werkzeughalter
- 5.: Abschirmung 5
- 6: nicht vergeben
- 7: Durchlass des Polschuhs 7
- 8: nicht vergeben
- 9: Zweiter Mantel
- 10: Leistungshalbleiterbauelement 1
- 11: Aussparung 11
- 12: Anschluss 12 eines Leistungshalbleiterbauelements
- 13: Rücksprung des zweiten Mantels
- 14a: Glättungskondensator
- 14b: Schwingkreiskondensator
- 15a: Elektrische Platine
- 15b: Elektrische Platine
- 16: Kühlkanal 16
- 17: Kühlkanalspeiseleitung

- G: Gleichrichter
- GNS: Gleichstrom -Niederspannung zur Speisung der Steuerungselektronik
- H: Halteschaft des Werkzeugs
- HP: Hülsenpartie des Werkzeughalters
- IC: integrierte Schaltung als Teil der Steuerungselektronik
- KU: Kupplung zum Ankuppeln der Schrumpfvorrichtung an eine Werkzeugmaschine
- L: Längsachse der Induktionsspule und des Werkzeughalters
- NST: Netzstrom
- SEK: Steuerelektronik
- SKS: Schwingkreis
- T: Trafo
- W: Werkzeug
- Fi: radial beweglicher Finger zur Zentrierung der Hülsenpartie bzw. des Werkzeughalters in der Induktionsspule

## Patentansprüche

1. Schrumpfvorrichtung zum Ein- und Ausspannen von einen Werkzeugschaft aufweisenden Werkzeugen mit einer Werkzeugaufnahme, die eine an ihrem freien Ende offene Hülsenpartie aus elektrisch leitendem Werkstoff zur reibschlüssigen Aufnahme des Werkzeugschafts aufweist, und mit einer die Hülsenpartie der Werkzeugaufnahme umfassenden, mit einem vorzugsweise hochfrequenten Wechselstrom beaufschlagbaren, als Ring- oder Zylinderspule ausgebildeten Induktionsspule (1) zum Erwärmen der Hülsenpartie (HP), wobei die Induktionsspule (1) an ihrem Außenumfang einen ersten Mantel (3) aus magnetisch leitfähigem und elektrisch nicht leitfähigem Material trägt und die Vorrichtung Leistungshalbleiterbauelemente (10) zur Herstellung eines die Induktionsspule (1) speisenden Wechselstroms umfasst sowie ein vorzugsweise aus isolierendem Material bestehendes Induktionsspulengehäuse, **dadurch gekennzeichnet, dass** die Induktionsspule (1) und ihr erster Mantel (3) am Außenumfang von einem zweiten Mantel (9) umgeben sind, der aus magnetisch nicht leitfähigem und elektrisch leitfähigem Material besteht und so ausgelegt ist, dass ein in seiner Umgebung auftretendes Streufeld Wirbelströme im zweiten Mantel (9) erzeugt und dadurch das Streufeld schwächt und dass zumindest die Leistungshalbleiterbauelemente (10) gemeinsam mit der Induktionsspule (1) in einem Induktionsspulengehäuse untergebracht sind, das die Induktionsspule (1), deren ersten und deren zweiten Mantel (3, 9), sowie die Leistungshalbleiterbaulemente (10) zumindest entlang des Umfangs der Induktionsspule (1) umschließt.

2. Schrumpfvorrichtung nach Anspruch 1 **dadurch gekennzeichnet, dass** die Leistungshalbleiterbauelemente (10) unmittelbar am Außenumfang des zweiten Mantels (9) angeordnet sind.

3. Schrumpfvorrichtung nach Anspruch 2, **dadurch gekennzeichnet, dass** der zweite Mantel (9) einen Kühlkörper für die Leistungshalbleiterbauelemente (10) bildet.

4. Schrumpfvorrichtung nach einem der vorhergehenden Ansprüche, **dadurch gekennzeichnet, dass** der zweite Mantel (9) eine oder bevorzugt mehrere Aussparungen besitzt, die jeweils ein Leistungshalbleiterbauelement (10) aufnehmen, bevorzugt so, dass das Leistungshalbleiterbauelement (10) jeweils vierseitig von dem zweiten Mantel (9) umschlossen ist.

5. Schrumpfvorrichtung nach einem der vorhergehenden Ansprüche, **dadurch gekennzeichnet, dass** die Vorrichtung einen Gleichrichter und Glättungs- (14a) bzw. Schwingkreiskondensatoren (14b) umfasst, zur vorrichtungsinternen Herstellung einer hochfrequenten Wechselspannung zum Speisen der Leistungshalbleiterbauelemente (10), wobei die Glättungskondensatoren (14a) und/oder die Schwingkreiskondensatoren (14b) vorzugsweise zylinderringförmig am Außenumfang der Induktionsspule (1) um diese herumgruppiert sind.

6. Schrumpfvorrichtung, nach Anspruch 1 oder Anspruch 2, **dadurch gekennzeichnet, dass** die Induktionsspule (1) zum Ein- und Ausschrumpfen von Werkzeugschäften aus Werkzeughaltern ausgestaltet ist, und dass der zweite Mantel (9) so ausgelegt ist, dass er ein in seiner Umgebung auftretendes Streufeld durch Ausbildung von Wirbelströmen schwächt.

7. Schrumpfvorrichtung, nach Anspruch 1 oder Anspruch 6, **dadurch gekennzeichnet, dass** die Induktionsspule (1) zum Ein- und Ausschrumpfen von Werkzeugschäften aus Werkzeughaltern ausgestaltet ist, dass die Leistungshalbleiterbauelemente (10) die die Induktionsspule (1) speisenden, ggü. der Netzspannung umgewandelten Wechselspannung herstellen.

8. Schrumpfvorrichtung nach einem der vorhergehenden Ansprüche, **dadurch gekennzeichnet, dass** die der Werkzeugaufnahme abgewandte Stirnseite der Induktionsspule (1) mit einer Abdeckung aus magnetisch leitfähigem und elektrisch nicht leitfähigem Material, vorzugsweise in Gestalt eines die gesamte Stirnfläche überdeckenden Polschuhs (3a), belegt ist.

9. Schrumpfvorrichtung nach Anspruch 8, **dadurch gekennzeichnet, dass** die Abdeckung örtlich einen Abschirmkragen (3bb) aufweist, der in Richtung der Längsachse (L) um mindestens den zweifachen Betrag des Werkzeugdurchmessers über die freie Stirnseite der Hülsenpartie des Werkzeughalters aufragt.

10. Schrumpfvorrichtung nach Anspruch 9, **dadurch gekennzeichnet, dass** der Abschirmkragen (3bb) werkzeuglos auswechselbar ist.

11. Schrumpfvorrichtung nach einem der vorhergehenden Ansprüche, **dadurch gekennzeichnet, dass** die der Werkzeugaufnahme zugewandte Stirnseite der Induktionsspule durch magnetisch leitendes und elektrisch nicht leitendes Material übergriffen wird.

12. Schrumpfvorrichtung nach einem der vorhergehenden Ansprüche durch gekennzeichnet, dass die Vorrichtung mindestens eine elektrische Platine (15a, 15b) ("Platte" oder "Folie") besitzt, die den Außenumfang der Induktionsspule (1) umgreift und die Glättungskondensatoren (14a) und/oder die Leistungshalbleiterbauelemente (10) elektrisch kontaktiert, wobei es bevorzugt ist, dass die Platine (15a, 15b) an zumindest einer ihrer Außenseiten mit einer elektrisch leitfähigen Schicht belegt ist, die geerdet ist, um Spannungspotentiale abzubauen.

13. Schrumpfvorrichtung nach Anspruch 12, **dadurch gekennzeichnet, dass** die Platine (15a, 15b) eine Platinenringscheibe ist, deren Rotationssymmetrieachse bevorzugt koaxial, ansonsten parallel zu der Längsachse der Induktionsspule (1) verläuft.

14. Schrumpfvorrichtung nach Anspruch 13, **dadurch gekennzeichnet, dass** zwei Platinenringscheiben vorhanden sind, zwischen denen entlang des Umfangs der Induktionsspule (1) die Glättungskondensatoren (14a) angeordnet sind.

15. Schrumpfvorrichtung nach einem der vorhergehenden Ansprüche **dadurch gekennzeichnet, dass** der zweiten Mantel (9) einen oder mehrere Kühlkanäle (16) bildet, die vorzugsweise in seinem Inneren verlaufen.

16. Schrumpfvorrichtung nach einem der vorhergehenden Ansprüche darunter insbesondere Anspruch 2, **dadurch gekennzeichnet, dass** die Vorrichtung eine Kupplung zum Befestigen der Vorrichtung in der Aufnahme einer Werkzeugmaschinenspindel aufweist.

17. Schrumpfvorrichtung nach einem der vorhergehenden Ansprüche, **dadurch gekennzeichnet, dass** die Induktionsspule (1) mit ihren ersten und zweiten Mantel (3, 9) und mindestens die Leistungshalbleiterbauelemente (10) und/oder die Glättungskondensatoren (14a) und idealerweise auch die Elektronik zum Ansteuern der Leistungshalbleiterbauelemente (10) im Inneren eines Spulengehäuses oder Spulengehäuserings untergebracht sind, der oder das zumindest den Umfang der Induktionsspule (1) umschließt und vorzugsweise auch mindestens eine besser beide Stirnseiten der Induktionsspule (1) übergreift.

18. Schrumpfvorrichtung nach Anspruch 17, **dadurch gekennzeichnet, dass** das Spulengehäuse einen Stecker zum unmittelbaren Einspeisen von Netzwechselspannung aus dem öffentlichen Netz (beispielsweise 110 V, 230 V oder 380 V) besitzt.

19. Schrumpfvorrichtung nach einem der Ansprüche 1 bis 17, **dadurch gekennzeichnet, dass** die Schrumpfvorrichtung batteriebetrieben ist.

20. Schrumpfvorrichtung nach einem der vorhergehenden Ansprüche, **dadurch gekennzeichnet, dass** ein Abschirmkragen (3bb) vorgesehen ist, der aus einzelnen Segmenten besteht, die derart beweglich sind, dass sie sowohl mit einer Bewegungskomponente in radialer als auch mit einer Bewegungskomponente in axialer Richtung verfahren werden können.

21. Schrumpfvorrichtung nach einem der vorhergehenden Ansprüche, **dadurch gekennzeichnet, dass** an der dem Werkzeughalter zugewandten Stirnseite der Induktionsspule und/oder im Luftinnenraum der Induktionsspule (1) Zentrierorgane vorgesehen sind, die bei auf Anschlag in die Induktionsspule (1) eingeschobener Hülsenpartie deren koaxiale Positionierung in der Induktionsspule (1) erzwingen.

22. Schrumpfvorrichtung nach einem der vorhergehenden Ansprüche, **dadurch gekennzeichnet, dass** die Schrumpfvorrichtung mindestens zwei Spulenwicklungsabschnitte besitzt, die in Richtung parallel zur Längsachse im Betrieb zum Zwecke der Einstellung auf die Geometrie einer zu erhitzenden Hülsenpartie aufeinander zu oder voneinander weg bewegt werden können.

23. Schrumpfsystem bestehend aus einer Schrumpfvorrichtung nach einem der vorhergehenden Ansprüche 1 bis 22, **dadurch gekennzeichnet, dass** zu dem Schrumpfsystem zusätzlich unterschiedliche, an der Schrumpfvorrichtung befestigbare Kupplungen gehören, mittels derer die Schrumpfvorrichtung an die Spindel einer Werkzeugmaschine festgesetzt werden kann.

## Claims

1. Shrink-fitting device for clamping and unclamping tools having a tool shank with a tool holder, which has a sleeve portion open at its free end and made of electrically conductive material for holding the tool shank with a friction fit, and having an induction coil (1) surrounding the sleeve part of the tool holder, formed as an annular or cylindrical coil to which preferably high-frequency AC voltage can be applied to heat the sleeve part (HP), wherein the induction coil (1) bears on its outer circumference a first casing (3) made of magnetically conductive and electrically nonconductive material, and the device comprises power semiconductor components (10) for producing an AC voltage feeding the induction coil (1) and an induction coil housing preferably consisting of insulating material, **characterized in that** the induction coil (1) and its first casing (3) are surrounded on the outer circumference by a second casing (9), which consists of magnetically nonconductive and electrically conductive material and is designed in such a way that a stray field occurring in its surroundings generates eddy currents in the second casing (9) and, as a result, weakens the stray field, and **in that** at least the power semiconductor components (10), together with the induction coil (1), are accommodated in an induction coil housing, which encloses the induction coil (1), its first and its second casing (3, 9) and the power semiconductor components (10), at least along the circumference of the induction coil (1).

2. Shrink-fitting device according to Claim 1, **characterized in that** the power semiconductor components (10) are arranged directly on the outer circumference of the second casing (9).

3. Shrink-fitting device according to Claim 2, **characterized in that** the second casing (9) forms a heat sink for the power semiconductor components (10) .

4. Shrink-fitting device according to one of the preceding claims, **characterized in that** the second casing (9) has one recess or preferably a plurality of recesses, which each accommodate a power semiconductor component (10), preferably such that the power semiconductor component (10) is in each case enclosed on four sides by the second casing (9) .

5. Shrink-fitting device according to one of the preceding claims, **characterized in that** the device comprises a rectifier and smoothing (14a) or resonant circuit capacitors (14b) for the production of a high-frequency AC voltage within the device for feeding the power semiconductor components (10), wherein the smoothing capacitors (14a) and/or the resonant circuit capacitors (14b) are preferably grouped in the form of a cylinder ring shape around the outer circumference of the induction coil (1).

6. Shrink-fitting device according to Claim 1 or Claim 2, **characterized in that** the induction coil (1) is configured for shrinking tool shanks in and out of tool holders, and **in that** the second casing (9) is designed such that it weakens a stray field occurring in its surroundings by forming eddy currents.

7. Shrink-fitting device according to Claim 1 or Claim 6, **characterized in that** the induction coil (1) is configured for shrinking tool shanks in and out of tool holders **in that** the power semiconductor components (10) produce the AC voltage feeding the induction coil (1), converted with respect to the mains voltage.

8. Shrink-fitting device according to one of the preceding claims, **characterized in that** the end face of the induction coil (1) facing away from the tool holder is covered with a covering of magnetically conductive and electrically nonconductive material, preferably in the shape of a pole shoe (3a) covering the whole of the end face.

9. Shrink-fitting device according to Claim 8, **characterized in that** the covering has locally a shielding collar (3bb) which, in the direction of the longitudinal axis (L), projects by at least twice the amount of the tool diameter beyond the free end face of the sleeve portion of the tool holder.

10. Shrink-fitting device according to Claim 9, **characterized in that** the shielding collar (3bb) can be replaced without tools.

11. Shrink-fitting device according to one of the preceding claims, **characterized in that** the end face of the induction coil facing the tool holder, is overlapped by magnetically conductive and electrically nonconductive material.

12. Shrink-fitting device according to one of the preceding claims, **characterized in that** the device has at least one electric circuit board (15a, 15b "board" or "film"), which overlaps the outer circumference of the induction coil (1) and makes electric contact with the smoothing capacitors (14a) and/or the power semiconductor components (10), wherein it is preferred that the circuit board (15a, 15b) is covered on at least its outer sides with an electrically conductive layer which is earthed, in order to reduce voltage potentials.

13. Shrink-fitting device according to Claim 12, **characterized in that** the circuit board (15a, 15b) is an annular circuit board disc, of which the axis of rotational symmetry preferably extends coaxially, otherwise parallel, to the longitudinal axis of the induction coil (1).

14. Shrink-fitting device according to Claim 13, **characterized in that** there are two annular circuit board discs, between which the smoothing capacitors (14a) are arranged along the circumference of the induction coil (1).

15. Shrink-fitting device according to one of the preceding claims, **characterized in that** the second casing (9) forms one or more cooling channels (16), which preferably run in its interior.

16. Shrink-fitting device according to one of the preceding claims, including in particular Claim 2, **characterized in that** the device has a coupling for fastening the device in the holder of a machine tool spindle.

17. Shrink-fitting device according to one of the preceding claims, **characterized in that** the induction coil (1), with its first and second casing (3, 9) and at least the power semiconductor components (10) and/or the smoothing capacitors (14a) and ideally also the electronics for driving the power semiconductor components (10), are accommodated in the interior of a coil housing or of a coil housing ring, which encloses at least the circumference of the induction coil (1) and preferably also overlaps at least one, better both, end face/s of the induction coil (1).

18. Shrink-fitting device according to Claim 17, **characterized in that** the coil housing has a plug for the direct feeding of mains AC voltage from the public mains (for example 110 V, 230 V or 380 V).

19. Shrink-fitting device according to one of Claims 1 to 17, **characterized in that** the shrink-fitting device is battery-operated.

20. Shrink-fitting device according to one of the preceding claims, **characterized in that** there is a shielding collar, (3bb), which consists of individual segments which can be moved in such a way that they can be moved both with a movement component in the radial and with a movement component in the axial direction.

21. Shrink-fitting device according to one of the preceding claims, **characterized in that** centring members are provided on the end face of the induction coil facing the tool holder and/or in the internal air space of the induction coil (1), which, when the sleeve portion is pushed fully into the induction coil (1), force its axial positioning in the induction coil (1).

22. Shrink-fitting device according to one of the preceding claims, **characterized in that** the shrink-fitting device has at least two coil winding sections which can be moved towards one another or away from one another in the direction parallel to the longitudinal axis during operation for the purpose of adjusting to the geometry of a sleeve portion to be heated.

23. Shrink-fitting system comprising a shrink-fitting device according to one of the preceding Claims 1 to 22, **characterized in that** the shrink-fitting system has in addition different couplings that can be fastened to the shrink-fitting device, by means of which the shrink-fitting device can be fixed to the spindle of a machine tool.

## Revendications

1. Dispositif de frettage pour monter par serrage et démonter des outils qui possèdent une queue d'outil comprenant un attachement d'outil, lequel possède une partie formant manchon ouverte à son extrémité libre, en un matériau électriquement conducteur, destinée à accueillir en assemblage par friction la queue d'outil, et comprenant une bobine d'induction (1) destinée à chauffer la partie formant manchon (HP), laquelle englobe la partie formant manchon de l'attachement d'outil, peut être sollicitée avec un courant alternatif de préférence à haute fréquence et est réalisée sous la forme d'une bobine annulaire ou cylindrique, la bobine d'induction (1) portant sur son pourtour extérieur une première enveloppe (3) en un matériau magnétiquement conducteur et électriquement non conducteur et le dispositif comportant des composants semiconducteurs de puissance (10) destinés à produire un courant alternatif qui alimente la bobine d'induction (1) ainsi qu'un boîtier de bobine d'induction composé de préférence d'un matériau isolant, **caractérisé en ce que** la bobine d'induction (1) et sa première enveloppe (3) sont entourées au niveau du pourtour extérieur par une deuxième enveloppe (9) qui se compose d'un matériau magnétiquement non conducteur et électriquement conducteur et qui est conçue de telle sorte qu'un champ de dispersion qui se produit dans son environnement produit des courants de Foucault dans la deuxième enveloppe (9) et affaiblit ainsi le champ de dispersion et **en ce qu'**au moins les composants semiconducteurs de puissance (10) conjointement avec la bobine d'induction (1) sont logés dans un boîtier de bobine d'induction qui entoure la bobine d'induction (1), sa première et sa deuxième enveloppe (3, 9) ainsi que les composants semiconducteurs de puissance (10) au moins le long du pourtour de la bobine d'induction (1).

2. Dispositif de frettage selon la revendication 1, **caractérisé en ce que** les composants semiconducteurs de puissance (10) sont disposés directement au niveau du pourtour extérieur de la deuxième enveloppe (9).

3. Dispositif de frettage selon la revendication 2, **caractérisé en ce que** la deuxième enveloppe (9) forme un dissipateur de chaleur pour les composants semiconducteurs de puissance (10).

4. Dispositif de frettage selon l'une des revendications précédentes, **caractérisé en ce que** la deuxième enveloppe (9) possède une ou de préférence plusieurs cavités qui accueillent respectivement un composant semiconducteur de puissance (10), de préférence de telle sorte que le composant semiconducteur de puissance (10) est respectivement entouré sur quatre côtés par la deuxième enveloppe (9).

5. Dispositif de frettage selon l'une des revendications précédentes, **caractérisé en ce que** le dispositif comporte un redresseur et des condensateurs de lissage (14a) ou de circuit oscillant (14b), destinés à produire en interne du dispositif une tension alternative à haute fréquence servant à alimenter les composants semiconducteurs de puissance (10), les condensateurs de lissage (14a) et/ou les condensateurs de circuit oscillant (14b) étant de préférence regroupés en forme d'anneau cylindrique au niveau du pourtour extérieur de la bobine d'induction (1) autour de celle-ci.

6. Dispositif de frettage selon la revendication 1 ou la revendication 2, **caractérisé en ce que** la bobine d'induction (1) est configurée pour le montage par frettage et le démontage de queues d'outil sur des porte-outils, et **en ce que** la deuxième enveloppe (9) est conçue de telle sorte qu'elle affaiblit un champ de dispersion qui se produit dans son environnement par la formation de courants de Foucault.

7. Dispositif de frettage selon la revendication 1 ou la revendication 6, **caractérisé en ce que** la bobine d'induction (1) est configurée pour le montage par frettage et le démontage de queues d'outil sur des porte-outils, **en ce que** les composants semiconducteurs de puissance (10) produisent la tension alternative, convertie par rapport à la tension du réseau, qui alimente la bobine d'induction (1).

8. Dispositif de frettage selon l'une des revendications précédentes, **caractérisé en ce que** le côté frontal de la bobine d'induction (1) qui est à l'opposé de l'attachement d'outil est occupé par un chapeau en un matériau magnétiquement conducteur et électriquement non conducteur, de préférence sous la forme d'une pièce polaire (3a) qui recouvre la totalité de la surface frontale.

9. Dispositif de frettage selon la revendication 8, **caractérisé en ce que** le chapeau possède localement une collerette de blindage (3bb) qui fait saillie dans la direction de l'axe longitudinal (L) d'au moins le double de la valeur du diamètre de l'outil au-dessus du côté frontal libre de la partie formant manchon du porte-outil.

10. Dispositif de frettage selon la revendication 9, **caractérisé en ce que** la collerette de blindage (3bb) peut être changée sans outil.

11. Dispositif de frettage selon l'une des revendications précédentes, **caractérisé en ce que** le côté frontal de la bobine d'induction qui fait face à l'attachement d'outil est recouvert d'un matériau magnétiquement conducteur et électriquement non conducteur.

12. Dispositif de frettage selon l'une des revendications précédentes, **caractérisé en ce que** le dispositif possède au moins une platine électrique (15a, 15b) (« plaque » ou « film ») qui entoure le pourtour extérieur de la bobine d'induction (1) et entre en contact électrique avec les condensateurs de lissage (14a) et/ou les composants semiconducteurs de puissance (10), avec pour préférence que la platine (15a, 15b) est garnie sur au moins l'un de ses côtés extérieurs d'une couche électriquement conductrice, laquelle est reliée à la terre pour évanouir les potentiels de tension.

13. Dispositif de frettage selon la revendication 12, **caractérisé en ce que** la platine (15a, 15b) est un disque annulaire de platine dont l'axe de symétrie de rotation suit de préférence un tracé coaxial, ou sinon parallèle à l'axe longitudinal de la bobine d'induction (1).

14. Dispositif de frettage selon la revendication 13, **caractérisé en ce que** deux disques annulaires de platine sont présents, entre lesquels les condensateurs de lissage (14a) sont disposés le long du pourtour de la bobine d'induction (1).

15. Dispositif de frettage selon l'une des revendications précédentes, **caractérisé en ce que** la deuxième enveloppe (9) forme un ou plusieurs canaux de refroidissement (16) qui suivent de préférence un tracé à l'intérieur de celle-ci.

16. Dispositif de frettage selon l'une des revendications précédentes, parmi lesquelles notamment la revendication 2, **caractérisé en ce que** le dispositif possède un accouplement servant à fixer le dispositif dans l'attachement d'une broche de machine-outil.

17. Dispositif de frettage selon l'une des revendications précédentes, **caractérisé en ce que** la bobine d'induction (1) avec sa première et sa deuxième enveloppe (3, 9) et au moins les composants semiconducteurs de puissance (10) et/ou les condensateurs de lissage (14a) et idéalement aussi l'électronique servant à piloter les composants semiconducteurs de puissance (10) sont logés à l'intérieur d'un boîtier de bobine ou d'une bague de boîtier de bobine qui entoure au moins le pourtour de la bobine d'induction (1) et recouvre de préférence aussi au moins un ou mieux les deux côtés frontaux de la bobine d'induction (1).

18. Dispositif de frettage selon la revendication 17, **caractérisé en ce que** le boîtier de bobine possède une fiche servant à l'injection directe d'une tension alternative de réseau depuis le réseau public (par exemple de 110 V, 230 V ou 380 V).

19. Dispositif de frettage selon l'une des revendications 1 à 17, **caractérisé en ce que** le dispositif de frettage fonctionne sur batterie.

20. Dispositif de frettage selon l'une des revendications précédentes, **caractérisé en ce qu'**une collerette de blindage (3bb) est présente, laquelle se compose de segments individuels qui sont mobiles de telle sorte qu'ils peuvent être déplacés à la fois avec une composante de mouvement dans la direction radiale et avec une composante de mouvement dans la direction axiale.

21. Dispositif de frettage selon l'une des revendications précédentes, **caractérisé en ce que** des organes de centrage se trouvent au niveau du côté frontal de la bobine d'induction qui fait face au porte-outil et/ou dans l'espace intérieur d'air de la bobine d'induction (1), lesquels, en butant contre la partie formant manchon emmanchée dans la bobine d'induction (1), forcent son positionnement coaxial dans la bobine d'induction (1).

22. Dispositif de frettage selon l'une des revendications précédentes, **caractérisé en ce que** le dispositif de frettage possède au moins deux portions d'enroulement de bobine qui, en fonctionnement, peuvent être rapprochées ou éloignées l'une de l'autre dans une direction parallèle à l'axe longitudinal à des fins de réglage sur la géométrie d'une partie formant manchon à chauffer.

23. Système de frettage composé d'un dispositif de frettage selon l'une des revendications 1 à 22, **caractérisé en ce que** différents accouplements pouvant être fixés au dispositif de frettage font en plus partie du système de frettage, au moyen desquels le dispositif de frettage peut être calé au niveau de la broche d'une machine-outil.
